# FASCICULE DE BREVET EUROPEEN

(11) **EP 1 690 701 B1**
(45) Date de publication et mention de la délivrance du brevet: **20.04.2011**
(21) Numéro de dépôt: 06290216.8
(22) Date de dépôt: 07.02.2006
(51) Int. Cl.: B60B 37/02, B60B 37/04, B60B 37/06, B61F 15/26, C09D 109/00

(54) **Film pour la protection d'essieux**
Schutzschicht für Achsen
Protective film for axles

(30) Priorité: 15.02.2005 FR 0501513
(43) Date de publication de la demande: 16.08.2006
(73) Titulaire: Société Nationale des Chemins de Fer Français, 75014 Paris (FR)
(72) Inventeur: Guenard, Thierry, 10100 Romilly Sur Seine (FR); Thouvenot, Patrice, 78711 Mantes La Ville (FR)
(74) Mandataire: Dossmann, Gérard

(56) Documents cités:
- DE-A1- 2 043 079
- FR-A- 2 260 459
- FR-A- 2 310 891
- US-A- 3 435 981

## Description

La présente invention concerne un film pour la protection d'essieux, notamment pour des véhicules ferroviaires, présentant des propriétés antichocs et des propriétés anticorrosion.

Un tel film selon la préambule de la revendication 1 est connu du document US 3435981 A.

Les organes de roulement comme les roues, les essieux-axes, les essieux montés ou les boîtes d'essieux sont soumis en permanence à des problèmes mécaniques liés à différents phénomènes physiques.

Les essieux se divisent généralement en plusieurs classes selon les conditions physiques auxquelles ils sont soumis. Les essieux de classe 1 sont utilisés pour des vitesses de circulation des véhicules ferroviaires supérieures à 200 km/h et sont soumis à la corrosion atmosphérique ainsi qu'à d'importants chocs mécaniques. Ces chocs mécaniques peuvent être dus à la projection sur l'essieu de projectiles de différentes tailles et notamment des morceaux de ballast. Les chocs dus à de tels projectiles se produisent à des vitesses pouvant être supérieures à 200 km/h. Ces chocs peuvent endommager l'essieu ce qui peut entraîner l'apparition de fissures ainsi que sa rupture au niveau de ses congés de raccordement.

Pour éviter ces inconvénients, les essieux de classe 1 sont généralement recouverts d'une protection antiballast. Cette protection permet de protéger l'essieu des chocs et de l'usure due à la corrosion atmosphérique. Cette protection consiste à appliquer à chaud sur l'essieu un revêtement à base de polyurée par pulvérisation à une pression allant de 130 à 160 bars. Le revêtement résulte de la condensation entre une résine à base de polyamines et d'un durcisseur isocyanate. Ce revêtement sèche rapidement et est très difficile, voire impossible à retirer pour l'examen de l'état de l'essieu au moment d'une révision de celui-ci par une opération de magnétoscopie ou par un examen aux ultrasons. Le retrait du revêtement nécessite en effet son découpage sur toute la longueur de l'essieu.

Du fait de l'adhérence du revêtement sur certaines parties de l'essieu, il est nécessaire de gratter le revêtement à plusieurs reprises afin de pouvoir l'enlever de façon homogène. Ceci peut provoquer l'apparition de fissures au niveau de l'essieu ce qui entraîne son endommagement.

Un tel revêtement peut également se désolidariser à certains endroits de l'essieu à cause des contraintes dues à la température, ce qui peut entraîner l'apparition de fissures ainsi que l'endommagement de l'essieu dû à des chocs répétés provoqués par des projections de morceaux de ballast.

En outre, l'application de ce revêtement par pulvérisation nécessite l'installation d'une cabine de peinture spécifique. De plus, ce revêtement doit présenter des propriétés antiballasts pour des épaisseurs supérieures à 5 millimètres ce qui oblige l'opérateur à effectuer plusieurs passes successives pour obtenir des propriétés antiballasts satisfaisantes. Ces passes successives augmentent le temps d'immobilisation de l'essieu. Le temps de séchage du revêtement étant _ très court et le revêtement étant difficile à enlever, le matériel d'application du revêtement doit être nettoyé très rapidement à l'aide de solvants très agressifs entraînant le rejet de composés organiques volatiles pouvant être nocifs pour la santé des opérateurs.

Les essieux de classe 2 et 3 sont utilisés pour des vitesses de circulation des véhicules ferroviaires inférieures à 200 km/h. Les essieux de classe 2 sont soumis à l'action de produits corrosifs spécifiques. Les essieux de classe 2 peuvent être utilisés, par exemple, pour les wagons transportant des marchandises ou en tant qu'essieux moteurs. Les essieux de classe 3 sont soumis quant à eux à la corrosion atmosphérique et sont utilisés notamment pour des véhicules voyageurs. Ces essieux sont également soumis à différents chocs légers dus à des projectiles, notamment des gravillons et des morceaux de ballast. Les chocs dus à de tels projectiles se produisent à des vitesses inférieures à 200 km/h.

Pour éviter ces inconvénients, les essieux de classe 2 et 3 sont revêtus d'un système de peinture hydrodiluable généralement pulvérisée à une pression supérieure à 140 bars. Cette couche de peinture est difficile à retirer sans la mise en oeuvre d'un procédé de décapage chimique ou de grenaillage ce qui rend plus complexe l'examen de l'état de l'essieu par une opération de magnétoscopie ou par un examen aux ultrasons. L'enlèvement de la couche de peinture entraîne le rejet de décapants ou de solvants qui peuvent être nocifs pour la santé des opérateurs.

Ainsi les différents revêtements utilisés à l'heure actuelle pour protéger les différentes catégories d'essieux présentent un certain nombre d'inconvénients.

Au vu de ce qui précède, l'invention a pour objet de protéger efficacement les essieux, quelle que soit leur catégorie, contre les différentes attaques auxquelles ils sont soumis, tout en facilitant les différents examens de l'état de l'essieu.

À cet effet, la demanderesse a trouvé de manière surprenante qu'en utilisant un film adhésif particulier pour la protection des différentes classes d'essieux, il était possible d'obtenir un film qui présente des propriétés antichocs améliorées et qui est en outre facile à retirer.

En particulier, le film pour la protection d'essieux selon l'invention peut être facilement retiré grâce à l'application d'un solvant biodégradable ce qui permet d'effectuer un examen de l'état des essieux au moment d'une révision par une opération de magnétoscopie ou d'un examen aux ultrasons.

La demanderesse a également constaté que l'élimination du film n'entraînait pas de rejet de composés organiques volatiles mesurables.

En outre, le film pour la protection d'essieux selon l'invention peut être utilisé sur des essieux de différentes classes pour les protéger à la fois contre des projections de morceaux de ballast à des vitesses supérieures à 200 km/h et contre des chocs légers, dus aux gravillons ou aux morceaux de ballast projetés à des vitesses inférieures à 200 km/h, ainsi que contre les différents types de corrosion auxquels ces essieux peuvent être soumis.

Le film pour la protection d'essieux selon l'invention permet en outre de réduire les délais d'immobilisation des essieux grâce à un temps de ,séchage nul du film contrairement aux revêtements de l'état de la technique.

En outre, l'application d'un film pour la protection d'essieux selon l'invention permet de maîtriser l'épaisseur de chacune des couches réduisant ainsi le temps d'immobilisation de l'essieu.

Selon un mode de réalisation, un film pour la protection d'essieux, comprend au moins :
- une première couche, susceptible d'adhérer à l'essieu, comprenant un composé choisi parmi l'aluminium et les élastomères, et sur lequel est déposé un composé adhésif, et
- une deuxième couche, comprenant au moins un composé adhésif sous forme pâteuse de type mastic, appliquée sur la face de la première couche ne comportant pas de composé adhésif.

De cette façon, le film présente notamment des propriétés antichocs contre les gravillons et la projection de morceaux de ballast à des vitesses inférieures à 200 km/h et est facile à retirer.

On entend par « composé adhésif » au sens de l'invention, un composé permettant l'adhésion de la première couche à l'essieu.

L'homme du métier pourra choisir les composés adhésifs parmi les différents composés de l'état de la technique présentant des propriétés adhésives. De préférence, il pourra choisir une colle acrylique ou une colle vinylique. Le composé adhésif déposé sur la première couche peut se présenter sous différentes formes, notamment sous forme de couche ou sous forme de particules pulvérisées.

On entend par « un composé adhésif sous forme pâteuse de type mastic » au sens de l'invention, un composé adhésif dont la consistance n'est ni liquide, ni solide à une température de 20°C.

Selon un autre mode de réalisation avantageux, le film pour la protection d'essieux selon l'invention comprend un composé adhésif comprenant au moins un pigment anticorrosion.

De cette façon, le film peut présenter pour les différentes classes d'essieux à la fois des propriétés antichocs, notamment contre des gravillons ou des morceaux de ballast projetés à des vitesses inférieures à 200 km/h, et des propriétés anticorrosion.

On entend par gravillon au sens de l'invention, un ensemble de particules ou de matériaux pouvant présenter une taille allant de 20 mm à 4 cm.

On entend par morceaux de ballast au sens de l'invention, des morceaux de matériau dur anguleux généralement concassé dont les dimensions sont comprises entre 4 et 10 cm et qui sont destinés à l'infrastructure des voies de chemin de fer.

Selon un autre mode de réalisation avantageux, le film pour la protection d'essieux peut comprendre en outre une troisième couche, appliquée sur la deuxième couche, et comprenant au moins un élastomère et/ou au moins un matériau thermoplastique ou thermodurcissable.

De cette façon, le film peut présenter avantageusement pour des essieux de classe 1 à la fois des propriétés antiballasts, dues à la présence de cette troisième couche, et des propriétés anticorrosion dues à la présence d'au moins un pigment anticorrosion dans le composé adhésif de la première couche susceptible d'adhérer à l'essieu dans le cas où il se substitue à un système de peinture. Le film permet ainsi de protéger l'essieu de classe 1 des morceaux de ballast pouvant être projetés à une vitesse allant de 200 km/h à 700 km/h.

Selon une autre caractéristique de l'invention, le pigment anticorrosion peut être choisi parmi le métaborate de baryum, le phosphate de zinc, le zinc, le silico chromate basique de plomb, le tétraoxychromate de zinc, le chromate de zinc, le chromate de strontium, l'oxyde de fer rouge, l'oxyde de fer jaune et le phosphate de chrome.

Ces pigments peuvent se présenter à l'état sec sous forme d'une poudre fine ou à l'état liquide. Ces pigments anticorrosion peuvent être présent en une quantité inférieure à 5 % en poids par rapport au poids total du composé adhésif.

Selon encore une autre caractéristique de l'invention, le film pour la protection d'essieux comprenant une couche susceptible d'adhérer à l'essieu comprend de l'aluminium.

L'aluminium présente l'avantage d'avoir de bonnes propriétés de traction qui vont permettre de pouvoir déformer plus facilement la couche adhésive en aluminium et de pouvoir ainsi recouvrir l'essieu sur l'ensemble de sa surface. De plus, la couche adhésive en aluminium va permettre de faciliter le retrait du film de l'essieu pour l'examen de celui-ci par une opération de magnétoscopie ou par un examen de l'essieu aux ultrasons. Le film pourra être retiré avantageusement sans déchirer la couche adhésive en aluminium.

La couche adhésive en aluminium permet également de protéger l'essieu d'un éventuel projectile qui aurait pu pénétrer la ou les couches précédentes. Cette couche adhésive présente, de préférence, une épaisseur pouvant être inférieure à cinq dixième de millimètre. Cette faible épaisseur va permettre à la couche adhésive en aluminium de se déformer et de venir enrouler l'essieu plus facilement.

Selon une autre caractéristique de l'invention, le composé adhésif de la couche susceptible d'adhérer à l'essieu est choisi parmi une colle acrylique ou vinylique.

Le composé adhésif sous forme pâteuse de type mastic de la deuxième couche, du fait de son caractère adhésif peut adhérer à la première couche. Dans le cas d'un film comportant au moins trois couches, ce composé permet l'adhésion entre la première et la troisième couche, sans ajout de produit collant.

Avantageusement, le composé adhésif sous forme pâteuse de type mastic de la deuxième couche peut être du mastic butyle, notamment celui commercialisé sous la dénomination T1520 par la société OLIN.

Le mastic butyle est un matériau pâteux et collant qui conserve ses propriétés dans le temps. La couche en mastic butyle va permettre d'amortir les chocs et va freiner les projectiles, gravillons et/ou morceaux de ballast, de façon à ce qu'ils viennent frapper la première couche susceptible d'adhérer à l'essieu avec une vitesse plus faible. La couche en mastic butyle présente de préférence une épaisseur pouvant être de l'ordre d'un millimètre.

Avantageusement, l'élastomère de la troisième couche est choisi parmi le polyuréthane, les silicones, le caoutchouc, le polyisobutylène et le polybutadiène. De préférence, l'élastomère de la troisième couche est du polyuréthane. La couche en polyuréthane présente de préférence une épaisseur pouvant être de l'ordre de 2 millimètres.

Selon une autre caractéristique de l'invention, le polyuréthane comprend des matières de charges choisies parmi des morceaux de caoutchouc, des fibres comme les fibres de verre et/ou des billes comme les billes de verre. Ces matières de charges comme notamment les morceaux de caoutchouc permettent d'améliorer les propriétés antiballasts de la couche en élastomère. Les morceaux de caoutchouc peuvent se présenter sous formes de matériaux concassés d'une granulométrie pouvant varier de 1 à 6 mm. Avantageusement, les matières de charges comme les fibres de verre permettent de conférer une résistance mécanique à la couche d'élastomère évitant ainsi que cette couche ne se déchire. Les matières de charges peuvent présenter une taille allant de 12µm à 6 mm. Les matières de charges peuvent être présentes en une quantité comprise entre 10% et 60% en poids par rapport au poids total de la couche de polyuréthane

Selon encore un autre mode de réalisation, la troisième couche peut comprendre un matériau permettant d'insonoriser les bruits dus aux vibrations de l'essieu. Ce matériau peut être du sulfate de baryum.

L'invention a également pour objet l'utilisation d'un film selon l'invention pour le revêtement d'essieux de véhicule ferroviaire. Les films pour la protection d'essieux qui présentent à la fois des propriétés antichocs, contre les gravillons ou les morceaux de ballast projetés à une vitesse inférieure à 200 km/h, et des propriétés anticorrosion sont de préférence utilisés pour le revêtement d'essieux de classe 2 ou 3. Les films pour la protection d'essieux qui présentent à la fois des propriétés antichocs, contre les morceaux de ballast projetés à une vitesse supérieure à 200 km/h, et des propriétés anticorrosion sont de préférence utilisés pour le revêtement d'essieux de classe 1.

L'invention a en outre pour objet un procédé de revêtement des essieux, en particulier des essieux de classe 2 ou 3. Le procédé consiste à appliquer sur l'essieu un film tel que décrit ci-dessus, et notamment un film présentant des propriétés antichocs, contre les gravillons ou les morceaux de ballast projetés à une vitesse inférieure à 200 km/h, et des propriétés anticorrosion.

L'invention a aussi pour objet un procédé de revêtement des essieux, en particulier des essieux de classe 1. Le procédé consiste à appliquer sur l'essieu un film tel que décrit ci-dessus, et notamment un film présentant des propriétés antiballasts et des propriétés anticorrosion. Avantageusement, les extrémités du film sont reliées avec un moyen de fixation au niveau des bords de la troisième couche. Dans le cas d'un essieu de classe 1, l'essieu peut être préalablement peint avant l'application du film à l'aide d'une peinture anticorrosion, pour améliorer l'effet anticorrosion.

D'autres caractéristiques et avantages de l'invention apparaîtront à l'examen détaillé de trois modes de réalisations pris à titre d'exemples non limitatifs d'un film pour la protection d'essieux selon l'invention et illustrés par les dessins annexés, sur lesquels :
la figure 1 représente une coupe transversale d'un film pour la protection d'essieux selon un premier mode de réalisation.
la figure 2 représente une coupe transversale d'un film pour la protection d'essieux selon un deuxième mode de réalisation et sur laquelle les éléments identiques à ceux de la figure 1 portent les mêmes références.
la figure 3 représente une coupe transversale d'un film pour la protection d'essieux selon un troisième mode de réalisation et sur laquelle les éléments identiques à ceux de la figure 2 portent les mêmes références.

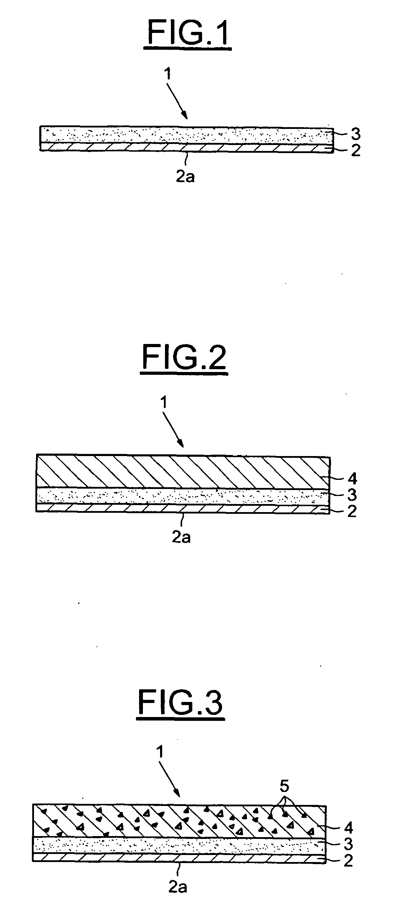

Tel qu'il est illustré sur les figures 1 à 3, un film 1 pour la protection d'essieux selon l'invention est destiné à revêtir des essieux d'un véhicule ferroviaire de n'importe quelle catégorie pour les protéger efficacement contre les différentes attaques auxquelles ils sont soumis, tout en facilitant les différents examens de l'essieu.

Dans un premier mode de réalisation tel qu'illustré sur la figure 1, le film 1 pour la protection d'essieux comprend une couche adhésive en aluminium 2 susceptible d'adhérer à l'essieu sur sa face 2a comportant une colle acrylique. Le film 1 comprend en outre une couche 3 de mastic butyle appliqué sur la face de la couche adhésive en aluminium 2 ne comportant pas la colle acrylique.

Pour préparer la couche adhésive en aluminium 2, on utilise un ruban d'aluminium 425/227 commercialisé par la société 3M et on pulvérise sur la face 2a de ce ruban d'aluminium de la colle acrylique comprenant du phosphate de zinc. La teneur en phosphate de zinc est inférieure à 5 % en poids par rapport au poids total de la colle acrylique. On fait ensuite sécher par rayonnements infrarouges la face 2a du ruban d'aluminium comprenant la colle acrylique et le phosphate de zinc pendant quelques minutes.

Après séchage, on obtient une couche adhésive en aluminium 2 que l'on peut découper selon les différentes dimensions souhaitées. On utilise une couche adhésive en aluminium 2 d'épaisseur inférieure à cinq dixième de millimètre. Cette couche, grâce à son épaisseur et aux bonnes propriétés de traction de l'aluminium, va pouvoir se déformer facilement.

On prépare la deuxième couche 3 constituée de mastic butyle et on l'applique sur la face de la couche adhésive d'aluminium 2 ne comportant pas la colle acrylique. La couche 3 constituée de mastic butyle présente une épaisseur de l'ordre d'un millimètre. Du fait du caractère collant du mastic butyle, cette couche adhère facilement sur la couche adhésive d'aluminium 2. La couche 3 en mastic butyle peut être avantageusement revêtue d'un film de polyéthylène. Un tel film permet de protéger cette couche de l'accumulation de la poussière ou de projectiles au niveau de sa surface. Il permet également d'améliorer les propriétés antichocs lorsqu'il présente une épaisseur de 200 µm.

Le film 1 présente de bonnes propriétés antichocs, contre les gravillons et les morceaux de ballasts projetés à des vitesses inférieures à 200 km/h, ainsi que de bonnes propriétés anticorrosion.

Dans un deuxième mode de réalisation tel qu'illustré sur la figure 2 et sur laquelle les éléments identiques à ceux de la figure 1 portent les mêmes références, le film 1 pour la protection d'essieux comprend en outre une troisième couche 4 en polyuréthane appliqué sur la couche 3 en mastic butyle, laquelle se trouve donc prise en sandwich entre la couche adhésive en aluminium 2 et la couche 4 en polyuréthane.

Pour préparer la couche adhésive en aluminium 2, on utilise un ruban d'aluminium 425/227 commercialisé par la société 3M et on pulvérise sur la face 2a de ce ruban d'aluminium de la colle acrylique comprenant du phosphate de zinc. La teneur en phosphate de zinc est inférieure à 5 % en poids par rapport au poids total de la colle acrylique. On fait ensuite sécher par rayonnements infrarouges la face 2a du ruban d'aluminium comprenant la colle acrylique et le phosphate de zinc pendant quelques minutes.

Après séchage, on obtient une couche adhésive en aluminium 2 que l'on peut découper selon les différentes dimensions souhaitées. On utilise une couche adhésive en aluminium 2 d'épaisseur inférieure à cinq dixième de millimètre. Cette couche, grâce à son épaisseur et aux bonnes propriétés de traction de l'aluminium, va pouvoir se déformer facilement.

On prépare la deuxième couche 3 constituée de mastic butyle et on applique cette couche sur la face de la couche adhésive d'aluminium 2 ne comportant pas la colle acrylique. On utilise une couche ayant une épaisseur de l'ordre d'un millimètre. Du fait du caractère collant du mastic butyle, cette couche adhère facilement sur la couche d'aluminium 2.

On prépare la troisième couche 4 constituée du polyuréthane. On l'applique sur la couche 3 de mastic butyle. Le mastic butyle, du fait de son caractère collant, va permettre l'adhésion de la couche 4 de polyuréthane.

Le film présente de bonnes propriétés antiballasts ainsi que de bonnes propriétés anticorrosion. En outre, le film peut présenter une bonne tenue au feu dans une formulation spécifique.

Dans un troisième mode de réalisation tel qu'illustré sur la figure 3 et sur laquelle les éléments identiques à ceux de la figure 2 portent les mêmes références, la couche 4 en polyuréthane comprend des matières de charges 5 choisies parmi les morceaux de caoutchouc, les fibres comme les fibres de verres ou les billes comme les billes de verre. La disposition de ces matières de charges peut être quelconque. Les matières de charges se présentent sous la forme de poudre dont la granulométrie peut varier entre 12 µm et 6 mm. Le film présente ainsi des propriétés antiballasts améliorées.

Les exemples suivants décrivent des procédés de revêtement d'essieux à l'aide de film selon l'invention.

### Exemple 1 : Procédé de revêtement d'un essieu de classe 2 ou 3.

On distingue généralement dans un essieu, sa partie droite et ses extrémités qui constituent les congés de raccordement d'un essieu. Lorsque des fissures apparaissent au niveau d'un essieu, elles apparaissent en premier lieu au niveau de ces congés de raccordement.

On applique, dans un premier temps, sur les congés de raccordement de l'essieu, une couche adhésive en aluminium. On applique cette couche sur la face comportant la colle acrylique de façon à ce qu'elle adhère aux congés de raccordement.

Dans un deuxième temps, on applique sur l'ensemble de l'essieu c'est-à-dire à la fois sur la partie droite de l'essieu et au niveau des congés de raccordement, le film illustré sur la figure 1. Ainsi les congés de raccordement présentent deux couches successives d'adhésifs en aluminium.

Après avoir recouvert l'essieu de classe 2 ou 3 de l'ensemble du film 1, on fixe un ruban adhésif de façon longitudinale au niveau des bords de la couche de mastic butyle 3, de façon à relier les extrémités du film 1. Ce collage va permettre au film 1 de ne pas se décoller en cours d'utilisation. On peut également préparer le film 1 directement sur l'essieu par poses successives des différentes couches.

Au moment d'une révision par une opération de magnétoscopie ou d'un examen aux ultrasons de l'état de l'essieu, on peut appliquer un solvant biodégradable qui va solubiliser la colle de l'adhésif. Après solubilisation de la colle, on peut retirer l'ensemble du film 1 en tirant sur la couche d'aluminium 2.

### Exemple 2: Procédé de revêtement d'un essieu de classe 1

De la même façon que pour le procédé de revêtement d'un essieu de classe 2 ou 3, on applique dans un premier temps la couche adhésive en aluminium sur les congés de raccordement et ensuite on applique le film 1, tel qu'illustré sur les figures 2 ou 3, sur l'ensemble de l'essieu.

Ainsi les congés de raccordement présentent deux couches successives d'adhésifs en aluminium. Après avoir recouvert l'essieu de classe 1 de l'ensemble du film 1, on vient appliquer une soudure aux niveaux des bords de la couche 4 en polyuréthane. On applique cette soudure à froid manuellement à l'aide d'un pistolet bi-composant, de façon à relier les extrémités du film. Cette soudure, constituée en polyuréthane, permet d'assurer que le film 1 qui entoure l'essieu ne pourra pas se décoller en cours d'utilisation. Le film 1 peut être aussi posé directement sur l'essieu par poses successives des différentes couches.

Au moment d'une révision par une opération de magnétoscopie ou d'un examen aux ultrasons de l'état de l'essieu, on peut appliquer un solvant biodégradable qui va solubiliser la colle de l'adhésif. Après solubilisation de la colle, on peut retirer l'ensemble du film 1 en tirant sur la couche d'aluminium 2. Ce procédé de solubilisation de la colle de l'adhésif permet d'éviter des rejets de solvants pouvant être nocifs pour la santé de l'opérateur.

## Revendications

1. Film (1) pour la protection d'essieux, **caractérisé en ce qu'**il comprend au moins :
- une première couche (2), susceptible d'adhérer à l'essieu, comprenant un composé choisi parmi l'aluminium et les élastomères, et sur lequel est déposé un composé adhésif, et
- une deuxième couche (3), comprenant au moins un composé adhésif sous forme pâteuse de type mastic, appliquée sur la face de la première couche (2) ne comportant pas de composé adhésif.

2. Film (1) pour la protection d'essieux selon la revendication 1, **caractérisé en ce que** le composé adhésif comprend au moins un pigment anticorrosion.

3. Film (1) pour la protection d'essieux selon la revendication 1 ou 2, **caractérisé en ce qu'**il comprend en outre une troisième couche (4), appliquée sur la deuxième couche (3), et comprenant au moins un élastomère et/ou au moins un matériau thermoplastique ou thermodurcissable.

4. Film (1) pour la protection d'essieux selon la revendication 2 ou 3, **caractérisé en ce que** le pigment anticorrosion est choisi parmi le métaborate de baryum, le phosphate de zinc, le zinc, le silico chromate basique de plomb, le tétraoxychromate de zinc, le chromate de zinc, le chromate de strontium, l'oxyde de fer rouge, l'oxyde de fer jaune et le phosphate de chrome.

5. Film (1) pour la protection d'essieux selon la revendication 2 à 4, **caractérisé en ce que** le pigment anticorrosion est présent en une quantité inférieure à 5 % en poids par rapport au poids total du composé adhésif.

6. Film (1) pour la protection d'essieux selon l'une quelconque des revendications 1 à 5, **caractérisé en ce que** la couche (2) susceptible d'adhérer à l'essieu comprend de l'aluminium.

7. Film (1) pour la protection d'essieux selon l'une quelconque des revendications 1 à 6, **caractérisé en que** le composé adhésif de la couche (2) est choisi parmi une colle acrylique ou vinylique.

8. Film (1) pour la protection d'essieux selon l'une quelconque des revendications 1 à 7, **caractérisé en ce que** le composé adhésif sous forme pâteuse de la deuxième couche (3) est le mastic butyle.

9. Film (1) pour la protection d'essieux selon l'une quelconque des revendications 3 à 8, **caractérisé en ce que** l'élastomère de la troisième couche (4) est choisi parmi le polyuréthane, les silicones, le caoutchouc, le polyisobutylène et le polybutadiène.

10. Film (1) pour la protection d'essieux selon l'une quelconque des revendications 3 à 9, **caractérisé en ce que** l'élastomère de la troisième couche (4) est un polyuréthane.

11. Film (1) pour la protection d'essieux selon la revendication 10, **caractérisé en ce que** le polyuréthane comprend des matières de charges (5) choisies parmi les morceaux de caoutchouc, les fibres de verre et/ou les billes de verre.

12. Film (1) pour la protection d'essieux selon l'une quelconque des revendications 3 à 11, **caractérisé en ce que** la troisième couche (4) comprend du sulfate de baryum.

13. Utilisation d'un film (1) selon l'une quelconque des revendications précédentes pour le revêtement d'essieux de véhicule ferroviaire.

## Claims

1. Protective film (1) for axles, **characterized in that** it comprises at least:
- a first layer (2), capable of adhering to an axle, comprising a compound which is chosen from aluminium and elastomers, and on which an adhesive compound is deposited; and
- a second layer (3) comprising at least one adhesive compound in a mastic-type pasty form, applied to that face of the first layer (2) not having the adhesive compound.

2. Protective film (1) for axles according to Claim 1, **characterized in that** the adhesive compound includes at least one anti-corrosion pigment.

3. Protective film (1) for axles according to Claim 1 or 2, **characterized in that** it further includes a third layer (4), applied to the second layer (3), which comprises at least one elastomer and/or at least one thermoplastic or thermoset.

4. Protective film (1) for axles according to Claim 2 or 3, **characterized in that** the anti-corrosion pigment is chosen from barium metaborate, zinc phosphate, zinc, basic lead silicochromate, zinc tetraoxychromate, zinc chromate, strontium chromate, red iron oxide, yellow iron oxide and chromium phosphate.

5. Protective film (1) for axles according to Claims 2 to 4, **characterized in that** the anti-corrosion pigment is present in an amount of less than 5% by weight relative to the total weight of the adhesive compound.

6. Protective film (1) for axles according to any one of Claims 1 to 5, **characterized in that** the layer (2) capable of adhering to the axle comprises aluminium.

7. Protective film (1) for axles according to any one of Claims 1 to 6, **characterized in that** the adhesive compound of the layer (2) is chosen from acrylic adhesives and vinyl adhesives.

8. Protective film (1) for axles according to any one of Claims 1 to 7, **characterized in that** the adhesive compound in pasty form of the second layer (3) is a butyl mastic.

9. Protective film (1) for axles according to any one of Claims 3 to 8, **characterized in that** the elastomer of the third layer (4) is chosen from polyurethane, silicones, rubber, polyisobutylene and polybutadiene.

10. Protective film (1) for axles according to any one of Claims 3 to 9, **characterized in that** the elastomer of the third layer (4) is a polyurethane.

11. Protective film (1) for axles according to Claim 10, **characterized in that** the polyurethane includes filler materials (5) chosen from rubber particles, glass fibres and/or glass beads.

12. Protective film (1) for axles according to any one of Claims 3 to 11, **characterized in that** the third layer (4) includes barium sulphate.

13. Use of a film (1) according to any one of the preceding claims for coating railway vehicle axles.

## Patentansprüche

1. Schutzschicht (1) für Achsen, **dadurch gekennzeichnet, dass** sie mindestens Folgendes aufweist:
- eine erste Schicht (2), die auf der Achse haften kann, die eine Verbindung aufweist, die aus Aluminium und den Elastomeren ausgewählt ist, und auf der eine Klebstoffverbindung aufgebracht ist, und
- eine zweite Schicht (3), die mindestens eine pastenartige Klebstoffverbindung des Typs Kitt aufweist, die auf die Seite der ersten Schicht (2), die keine Klebstoffverbindung aufweist, aufgetragen ist.

2. Schutzschicht (1) für Achsen nach Anspruch 1, **dadurch gekennzeichnet, dass** die Klebstoffverbindung mindestens ein Rostschutzpigment enthält.

3. Schutzschicht (1) für Achsen nach Anspruch 1 oder 2, **dadurch gekennzeichnet, dass** sie des Weiteren eine dritte Schicht (4) aufweist, die auf die zweite Schicht (3) aufgetragen ist und mindestens ein Elastomer und/oder mindestens ein Thermoplastmaterial oder ein wärmehärtbares Material enthält.

4. Schutzschicht (1) für Achsen nach Anspruch 2 oder 3, **dadurch gekennzeichnet, dass** das Rostschutzpigment ausgewählt ist aus Bariummetaborat, Zinkphosphat, Zink, basischem Bleisilikochromat, Zinktetraoxichromat, Zinkchromat, Strontiumchromat, Eisenoxidrot, Eisenoxidgelb und Chromphosphat.

5. Schutzschicht (1) für Achsen nach Anspruch 2 bis 4, **dadurch gekennzeichnet, dass** das Rostschutzpigment in einer Menge kleiner als 5 Gew.-% des Gesamtgewichts der Klebstoffverbindung gegenwärtig ist.

6. Schutzschicht (1) für Achsen nach einem der Ansprüche 1 bis 5, **dadurch gekennzeichnet, dass** die Schicht (2), die auf der Achse haften soll, Aluminium enthält.

7. Schutzschicht (1) für Achsen nach einem der Ansprüche 1 bis 6, **dadurch gekennzeichnet, dass** die Klebstoffverbindung der Schicht (2) aus einem Acryl- oder Vinylklebstoff ausgewählt ist.

8. Schutzschicht (1) für Achsen nach einem der Ansprüche 1 bis 7, **dadurch gekennzeichnet, dass** die pastenartige Klebstoffverbindung der zweiten Schicht (3) ein Butylkitt ist.

9. Schutzschicht (1) für Achsen nach einem der Ansprüche 3 bis 8, **dadurch gekennzeichnet, dass** das Elastomer der dritten Schicht (4) ausgewählt ist aus Polyurethan, den Silikonen, Kautschuk, Polyisobutylen und Polybutadien.

10. Schutzschicht (1) für Achsen nach einem der Ansprüche 3 bis 9, **dadurch gekennzeichnet, dass** das Elastomer der dritten Schicht (4) ein Polyurethan ist.

11. Schutzschicht (1) für Achsen nach Anspruch 10, **dadurch gekennzeichnet, dass** das Polyurethan Füllstoffe (5) aufweist, die aus Kautschukstücken, Glasfasern und/oder Glaskugeln ausgewählt sind.

12. Schutzschicht (1) für Achsen nach einem der Ansprüche 3 bis 11, **dadurch gekennzeichnet, dass** die dritte Schicht (4) Bariumsulfat enthält.

13. Einsatz einer Schicht (1) nach einem der vorhergehenden Ansprüche zum Beschichten von Gleisfahrzeugachsen.
